# EUROPÄISCHE PATENTSCHRIFT

(11) **EP 2 174 188 B1**
(45) Veröffentlichungstag und Bekanntmachung des Hinweises auf die Patenterteilung: **12.09.2012**
(21) Anmeldenummer: 08784373.6
(22) Anmeldetag: 21.07.2008
(51) Int. Cl.: G03B 35/10, H04N 13/00

(54) **Vorrichtung zur automatischen Positionierung von gekoppelten Kameras zur plastischen Bilddarstellung**
Apparatus for the automatic positioning of coupled cameras for three-dimensional image representation
Système de positionnement automatique de caméras accouplées pour représentation en trois dimensions

(30) Priorität: 24.07.2007 DE 202007010389 U
(43) Veröffentlichungstag der Anmeldung: 14.04.2010
(73) Patentinhaber: Maier, Florian, 82205 Gilching (DE)
(72) Erfinder: Maier, Florian, 82205 Gilching (DE)
(86) Internationale Anmeldenummer: PCT/DE2008/001192
(87) Internationale Veröffentlichungsnummer: WO 2009/012761

(56) Entgegenhaltungen:
- WO-A-2004/107762
- WO-A-2006/038570
- DE-A1- 10 300 925
- FR-A- 2 599 579
- US-A1- 2007 121 182
- US-B2- 7 209 161
- SAND R: "DREIDIMENSIONALES FERNSEHEN" FKT FERNSEH UND KINOTECHNIK, FACHVERLAG SCHIELE & SCHON GMBH., BERLIN, DE, Bd. 37, Nr. 8, 1. August 1983 (1983-08-01), Seiten 321-328, XP000858574 ISSN: 1430-9947 in der Anmeldung erwähnt

## Beschreibung

Die Erfindung betrifft eine Vorrichtung zur automatischen Positionierung von mindestens zwei gekoppelten Kameras zur Aufnahme von plastisch wirkenden Bildern, die mit mehrkanaligen Bilddarstellungstechniken gezeigt werden. Unter Positionierung ist die Anpassung der Stereobasis, das Einschwenken der Kameras auf den sogenannten Point-of-Interest (in der Regel ist dies ein Objektpunkt in Scheinfensterweite) und die Verwendung dafür geeigneter Kameraparameter zu verstehen. Für die automatische Bestimmung vorgenannter Parameter wird unter anderem eine Abstandsmessung definierter Punkte eines Aufnahmesets (Objektraumes) herangezogen.

### Stand der Technik:

Zur Aufnahme von plastisch (= dreidimensional) wirkenden Bildern, die mit mehrkanaligen Bilddarstellungstechniken gezeigt werden, sind mindestens zwei Ansichten von einem aufzunehmenden Objekt notwendig, wobei die Einzelbilder zu einem einzigen dreidimensional wirkenden Bild zusammengefügt werden (z. B. nach Falk, D.; Brill, D.; Stork, D.; Ein Blick ins Licht: Einblicke in die Natur des Lichts und des Sehens, in Farbe und Fotografie; Birkhäuser Verlag, Basel-Boston und Springer Verlag, Berlin-Heidelberg; 1990; Seite 230 ff). Diese Bilder können mit bekannten Bildtrennverfahren wie dem Polarisationsverfahren, Shutterbrillen-Techniken, autostereoskopischen Linsenraster-Techniken, Parallax-Barrier-Techniken oder ähnlichen Verfahren zur plastischen Bilddarstellung gezeigt werden. Alle diese Verfahren benötigen mindestens zwei perspektivisch unterschiedliche Ansichten von einem Objekt. Diese Ansichten werden üblicherweise durch mindestens zwei Kameras generiert, die in unterschiedlicher, benachbarter Perspektive aufgestellt sind (vgl. Sand R.; Dreidimensionales Fernsehen; in DE-Z: Fernseh- und Kino-Technik, 37, Nr. 8/1983: Seite 321 ff).

Diese Kameras blicken entweder nebeneinander in die gleiche Richtung, jedoch mit leicht unterschiedlicher Perspektive (Parallaxe), oder sind auf zwei Kameraebenen platziert, die durch einen halbdurchlässigen Spiegel zu einer Ebene zusammengeftihrt werden. Weiterhin ist es auch möglich, mindestens zwei Kameras auf mindestens zwei Ebenen anzuordnen (siehe beispielhafte Ausführung in DE 10 2005 042 413). Die resultierenden Kamerablickwinkel blicken dabei ebenfalls in die gleiche Richtung und die Aufnahmen werden aus leicht unterschiedlichen Perspektiven getätigt.

Oft wird der Einfachheit halber ein fixer Kameraabstand gewählt (vgl. WO 2006/038570 A1 oder WO 2004/107762 A1), jedoch hat dies eine eingeschränkte Güte der plastischen Reproduktion zur Folge. Um die gesamte Dynamik eines plastischen Darstellungsverfahrens mit den unterschiedlichsten Motiven auszuschöpfen und physiologische Grenzen beim Betrachten des aufgenommenen plastisch wirkenden Bildes nicht zu überschreiten, ist nötig, die so genannte Stereobasis (resultierender Abstand der Objektivmitten zueinander) an jedes plastische Aufnahmeset und an das Motiv in Abhängigkeit von weiteren Parametern wie z.B. der späteren Darstellungsgröße des plastischen Bildmaterials anzupassen. Dies betrifft sowohl die Aufnahme mit zwei oder mehr resultierend parallel aufgestellten Kameras (parallele optischen Achsen), als auch die Aufnahme mit einem Kameraaufbau mit resultierend konvergierenden optischen Achsen. Bei einem Kameraaufbau mit resultierend konvergierenden Achsen werden die Kameras auf den Point of Interest eingeschwenkt, wenn der Effekt aus bestimmten Gründen durch ein Verschieben der Einzelbilder zueinander im Nachhinein nicht mehr getätigt werden kann. Dieser Point of Interest liegt dann bei der unbearbeiteten plastischen Wiedergabe in der sogenannten Scheinfensterebene - entspricht z.B. der physikalischen Projektionsfläche, auf die das Bild projiziert wird -, da sich Objekte in diesem Punkt durch eine Disparität von Null auszeichnen. Ein Grund für die Nutzung eines resultierend konvergierenden Kameraaufbaus statt einer nachträglichen Verschiebung der stereoskopischen Einzelbilder zueinander kann sein, dass die nutzbare Bildfläche zu gering werden würde. Daher ist bei einigen Aufnahmevorrichtungen sowohl eine Verstellung der Stereobasis zwischen den Kameras, als ggf. auch ein Einschwenken der Kameras um einen horizontalen Drehwinkel auf den Point of Interest möglich.

Bei einer Anordnung wie in FR 2 599 579 A1 wird nicht die Entfernung zu einem oder mehreren relevanten Punkten im Objektraum gemessen. Zwar kann dort die Stereobasis verändert werden, jedoch nicht in Abhängigkeit der Objektentfernung sondern nur in Abhängigkeit des Zooms.

### Problem und Aufgabe:

Das Setzen dieser beiden Parameter (Stereobasis und Konvergenzeinstellung der Kameras) an einer dreidimensionalen Aufnahmevorrichtung geschieht nach dem Stand der Technik zunächst durch Einschätzung und Experimentieren durch den Operator. Durch nachfolgendes Betrachten des Ergebnisses mit entsprechender Korrektur ist ein jeweiliges Einregeln der mannigfaltigen Parameter durchzuführen, was jedoch viel Erfahrung erfordert und von Laien praktisch nicht durchführbar ist, da das Ausprobieren und Finden der geeigneten Werte der Parameter sehr langwierig ist. Hinzu kommt, dass nicht alle Darstellungsparameter für die verschiedensten späteren plastischen Präsentationsverfahren am Aufnahmeset simuliert werden können.

Der Erfindung liegt daher die Aufgabe zugrunde, die vorgenannten Nachteile des Standes der Technik auf einfache Art zu beseitigen und eine universell einsetzbare und jeweils individuell an die jeweiligen Objektparameter angepasste Vorrichtung zur Verfügung zu stellen, die einen hohen Grad an Automatisierung aufweist und den Kameraoperator mit maximalen Hilfestellungen bei den Einstellungen unterstützt.

### Problemlösung:

Als Lösung hierfür schlägt die Erfindung eine Vorrichtung mit den Merkmalen des Anspruchs 1 oder 2 vor. Vorteilhafte Ausgestaltungen sind in den Ansprüchen 3 bis 15 angeführt. Der Begriff Kamera umfasst sowohl die Fotografie als auch die Bewegtbildaufnahme.

Die Vorrichtung bedient sich der Anordnung von mindestens zwei gekoppelten Kameras, wie sie oben zum Stand der Technik beschrieben wurde. Diese beiden Kameras werden durch eine Positioniereinrichtung auf die Stereobasis und bestimmte Parameter wie z.B. Einschwenkwinkel einjustiert. Diese Einstellung kann sowohl manuell durch eine entsprechende Präzisionsmechanik als auch motorgesteuert vorgenommen werden.

Um die richtige Einstellung vornehmen zu können, ist ein System zur Abstandsmessung von wichtigen Punkten im Objektraum relativ zur Aufnahmevorrichtung vorgesehen. Als Bezugspunkt in der Aufnahmevorrichtung, die aus den Kameras, einer Montage- und Positioniereinrichtung und evtl. einem Strahlenteileraufbau besteht, kann die Bildebene (Sensorebene) gewählt werden. Im Objektraum werden relevante Punkte - wie zum Beispiel der Nahpunkt, die Scheinfensterweite, der Fempunkt - manuell oder automatisch gewählt. Die Abstandsmessung kann durch eine gängige Methode, z.B. über Ultraschall, ein Autofocus-System, ein Lasermesssystem, über eine Stereokamera mit Hilfe von geometrischen Rekonstruktionsalgorithmen, Triangulation usw. vorgenommen werden. Auch kann durch eine Bildanalyse über die vorhandenen Kameras bei bekanntem festen oder ausgelesenem aktuellem Kameraabstand die Abstandsmessung erfolgen. Dabei berücksichtigt die Abstandsmessung vorzugsweise die bildwichtigen oder im Bild sichtbaren Teile des Objektraums bzw. Begrenzungen und Vorgaben, die der Operator durch gestalterische Überlegungen in das System eingeben kann.

Die Ausgangssignale aus der Abstandsmessung werden von einer Rechnereinheit automatisch oder durch manuelles Übertragen der vorgenannten Ausgangsdaten erfasst und es werden damit die optimale oder maximale Stereobasis und weitere Parameter, wie ggf. Einschwenkwinkel, mechanische oder optische Korrekturparameter oder Kameraparameter wie Fokuspunkt je nach Point-of-Interest-Gewichtung oder Blendeneinstellung oder eine spätere Einzelbildverschiebung usw. berechnet. Weitere Eingangsdaten für die Rechnereinheit können sowohl vorab gespeicherte Daten zu beispielsweise verwendeten Komponenten sein, als auch Daten, die aus verwendeten Komponenten ausgelesen werden. Die Rechnereinheit kann vorzugsweise eine Benutzerschnittstelle aufweisen, bei der Parameter manuell gewählt, modifiziert oder eingegeben werden können. Bei Kamerafahrten oder Zoomfahrten oder Bewegung des/der Aufnahmeobjekte ist eine fortlaufende Aktualisierung der Eingangsdatenerfassung denkbar, aber auch gezielt abschaltbar.

Aus diesen Daten werden unter Kenntnis des späteren Darstellungssetups (z.B. Wiedergabetechnik, Bildgröße, Betrachterentfemung, usw.) Ausgabeparameter durch ein vorzugsweise vorab gespeichertes Programm berechnet, und zwar die Stereobasis (z.B. die maximal mögliche Stereobasis oder die optimale Stereobasis), und weitere Parameter, wie der Einschwenkwinkel der Kameras oder eine Verschiebung der stereoskopischen Halbbilder zueinander, Korrekturparameter, innere Parameter der Kameras usw.. Das Programm kann je nach Parameter Vorschläge zur Tiefengestaltung anzeigen und/oder ausführen und/oder Grenzen der plastischen Bildaufnahme und/oder Grenzen der späteren Darstellung berechnen.

Die Verstellung der Parameter kann automatisch aktualisiert bzw. den Gegebenheiten angepasst werden. Darunter ist zu verstehen, dass die Ausgabeparameter bestimmten Zeiten (z.B. Abruf über eine Synchronisation mit dem Timecode der Kameras) oder Positionsabfolgen (z.B. Abruf über eine Synchronisation mit einer Motion-Control-Vorrichtung) zugeordnet werden können (z.B. in einer definierbaren zeitlichen bzw. örtlichen Reihenfolge bei der Bewegtbildaufnahme).

Die Ausgabeparameter werden nun (ggf. zur zeitlich im vornherein definierten Reihenfolge) entweder manuell oder elektronisch auf die Positioniereinrichtung, die vorzugsweise Schrittmotoren aufweist, und ggf. an andere verwendete Komponenten (z.B. Objektive, Kameras) übertragen.

Mit den an die Positioniereinrichtung übertragenen Ausgangsparametem der Rechnereinheit werden die Kameras einjustiert. Dabei kann eine Kamera in ihrer Position feststehen, wobei die andere bzw. die anderen Kameras durch die Positioniereinrichtung einjustiert werden.

Um maximale Grenzen bei der plastischen Bildaufnahme nicht zu überschreiten, sind in der Recheneinheit bzw. an der Positioniereinrichtung Funktionen bzw. Vorrichtungen vorhanden, die vorteilhafterweise die Justagewege elektronisch oder mechanisch (z.B. durch einen verfahrbaren Anschlag) begrenzen. Die Möglichkeit des Eingriffs des Operators besteht auch nach Berechnung der Einstellparameter, um die Parameter jederzeit an verschiedene Aufnahmesituationen anpassen zu können. Vorzugsweise können die Einstellungsgrenzen oder Positioniervorschläge an einer Anzeigevorrichtung mit Vorschlägen zur Bildgestaltung oder Information über maximale Grenzen dargestellt werden. Diese Anzeigevorrichtungen können z.B. ein Monitor und/oder eine andere Anzeigeeinheit sein, die an der Aufnahmevorrichtung oder einer Handsteuereinheit angebracht ist. Diese Anzeigeeinheit kann beispielsweise aus einer Reihe von LEDs in unterschiedlichen Aktivierungszuständen bestehen. Vorzugsweise an dem Monitor und/oder der Anzeigeeinheit kann die aktuelle Position mindestens einer Kamera angezeigt werden. Ebenso können aufgrund der berechneten Parameter Vorschläge zur Änderung der Positionierung mindestens einer Kamera und/oder Darstellungsgrenzen und/oder Gestaltungsvorschläge angezeigt werden. Hierbei können bildrelevante Teile und maximale Aktionsgrenzen sichtbar gemacht werden, beispielsweise die minimale oder maximal erlaubte Entfernung zur Kamera bei einer bestimmten Stereobasis. Dies soll verhindern, dass die Disparität im Bild bei Nichtbeachten dieser Grenzen zu groß wird und beim Zuschauer im schlimmsten Falle zu Betrachtungsproblemen bzw. zum Bildzerfall führt.

Auf einem Monitor, der ein plastisches Bild erzeugen kann, können ebenfalls die über die Rechnereinheit bestimmten Grenzen bei der plastischen Bilddarstellung mit dargestellt werden. Wird beispielsweise mit einem resultierend parallelen Kameraaufbau aufgenommen, kann die spätere Einzelbildverschiebung je nach gewünschter Scheinfenstereinstellung automatisch an diesem plastischen Anzeigegerät simuliert werden. Dies geschieht beispielsweise durch eine mechanische Verschiebung von mindestens einem Monitordisplay relativ zum anderen Monitordisplay an einem Zweimonitor-Anzeigegerät mit einen halbdurchlässigen Spiegel oder durch eine softwareseitige Verschiebung an einem einzigen Monitordisplay an einem EinmonitorAnzeigegerät (beispielsweise unter Nutzung der Anaglyphtechnik).

Vorzugsweise soll eine Möglichkeit der Visualisierung der Einstellparameter und Grenzen für Operator und/oder für die an der Aufnahme beteiligten Personen/Darsteller im Objektraum (Aufnahmeset) vorhanden sein. Dies kann beispielsweise eine Projektion der darstellbaren Grenzen bzw. des Scheinfensters in den Objektraum oder eine Visualisierung an einem Monitor/Head-Mounted-Display (HMD) sein. Ein Ausführungsbeispiel wäre eine Projektion in das Aufnahmeset, bei dem "verbotene" Bildbereiche gekennzeichnet (z.B. farbig markiert) werden - diese Kennzeichnung lässt sich für die echte Aufnahme ausblenden bzw. in für den Menschen sichtbaren aber für die Kamera durch Sperrfilter unsichtbaren Wellenlängenbereichen darstellen. Eine Alternative dazu wäre ein mit den Kameras über beispielsweise Genlock synchronisiertes Projektionssystem, das die Aufnahmepausen (z.B. Austastlücke zwischen zwei Bildern) nutzt, um in genau diesem Moment bestimmte Bereiche in den Aufnahmeraum zu projizieren und rechtzeitig zur erneuten Bildaufnahme der Kameras wieder auszuschalten. Damit würden die markierten und projizierten Bereiche bei der integralen Wahrnehmung des Menschen eingeblendet erscheinen, wohingegen diese bei der plastischen Bildaufnahme für die Kameras nicht sichtbar sind. Alternativ können diese Bereiche auf einer Monitor- oder einer HMD-Visualisierung dargestellt werden.

Vorzugsweise ist bei der beanspruchten Vorrichtung zusätzlich eine Aufzeichungseinrichtung vorhanden, die die für die plastische Bildaufnahme berechneten und eingestellten Daten zusätzlich zu aus dem verwendeten Equipment ausgelesenen Daten, wie z.B. Timecode, Brennweiteneinstellung, Iriseinstellung, Verschusszeiteinstellung, usw. als sogenannten Metadaten aufzeichnen und später wieder zur Verfügung stellen kann.

Als weiteres Ausführungsbeispiel ist eine vollautomatische dreidimensionale Kameraeinheit denkbar, die die beschriebenen Komponenten enthält. Dabei werden alle bildwichtigen Parameter automatisch gemessen (u.a. von einer Abstandsmessvor richtung) und die Stereobasis und/oder der Einschwenkwinkel und/oder andere Parameter automatisch eingestellt und ggf. der aktuellen Aufnahmesituation bzw. Zoomeinstellung dynamisch angepasst.

Die alternative Lösung betrifft einen starren Kameraaufbau mit mehreren zu- und abschaltbaren Kameras, bei der beispielsweise bei einer Vergrößerung der Stereobasis eine Zuschaltung von weiter voneinander entfernten Kameras möglich ist, was einer virtuellen automatischen Positionierung gleichkommt. Besteht also eine Kameraapparatur beispielsweise aus 4 Kameras, so können bei kleiner Stereobasis die beiden inneren Kameras und bei großer Stereobasis die beiden äußeren Kameras für das plastische Bild verwendet werden. Die Einschätzung, ob eine große oder kleine Stereobasis von Nöten ist, liefert hierbei ebenfalls die Abstandsmessvorrichtung und die Rechnereinheit, wie oben beschrieben.

### Erreichte Vorteile:

Durch den hohen Grad an Automatisierung wird die plastische Bildaufnahme sowohl bei Fotografie als auch insbesondere bei Bewegtbildaufnahme wirtschaftlich attraktiv. War die Generierung von plastischem Material bislang mit viel Erfahrung und vielen benötigten Aufnahmeversuchen verbunden, so können mit Hilfe der vorgeschlagenen Vorrichtung innerhalb kürzester Zeit exakte plastische Aufnahmen gemacht werden. Hierbei wird der Operator in der Entscheidungsfindung und bei Einstelltätigkeiten sehr stark entlastet, was die plastische Bildaufnahme auch für Laien bedienungsfreundlich erschließt.

### Figurenbeschreibung:

Es zeigen beispielhaft:

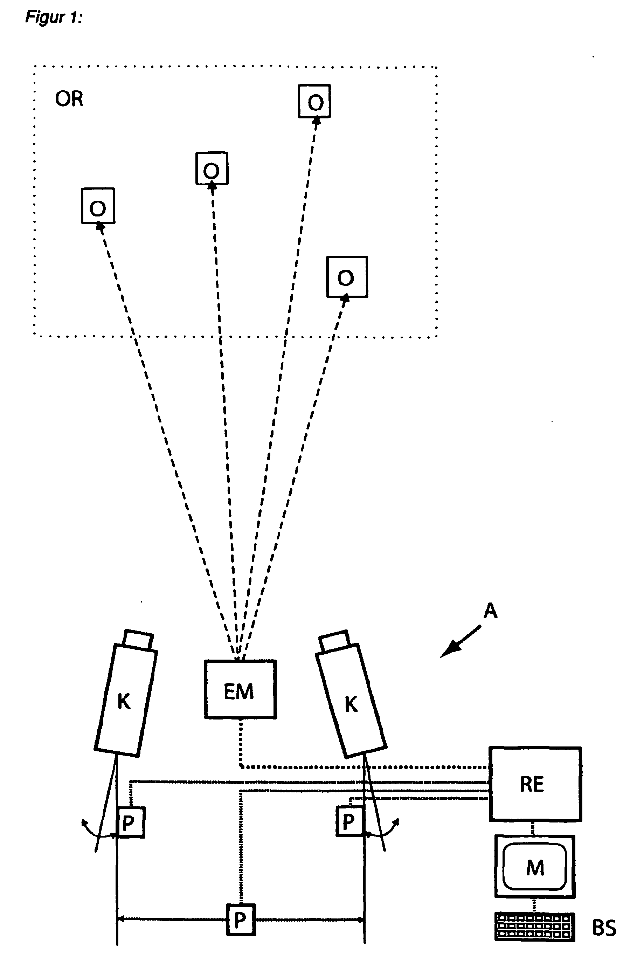

- **Fig. 1**: Eine Vorrichtung zur automatischen Positionierung von mindestens zwei Kameras (K), bestehend aus einer Entfemungsmessvorrichtung (EM), die die Abstände der Objektpunkte (O) im Objektraum (OR) relativ zur Aufnahmevorrichtung (A) misst, einer Rechnereinheit (RE), mehreren Komponenten zur Positionierung (P), einem Monitor (M) und einer Benutzerschnittstelle (BS).

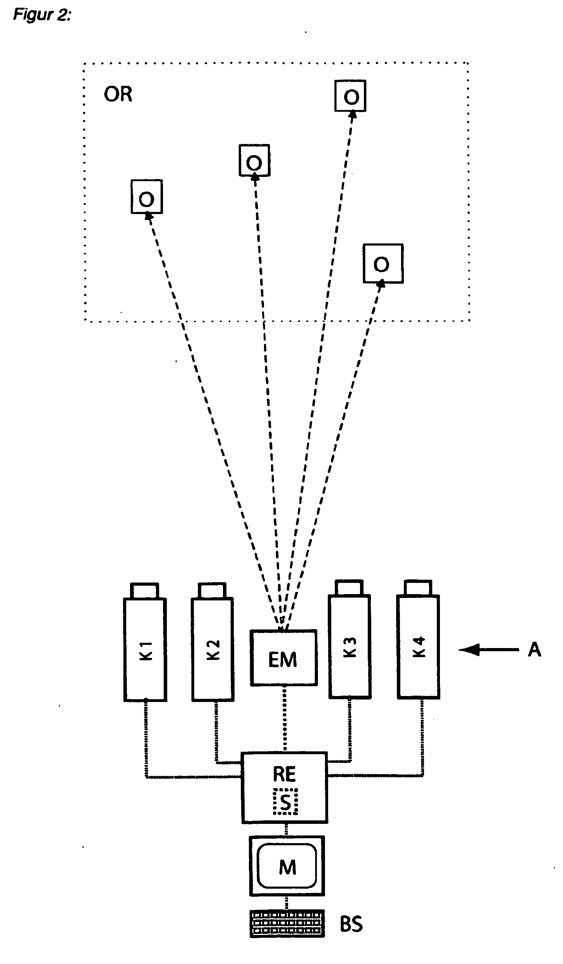

- **Fig. 2**: Eine Vorrichtung zur automatischen virtuellen Positionierung von mindestens zwei Kameras aus n Kameras (K1 bis Kn) - hier n = 4 - zur Variation der Stereobasis, bestehend aus einer Entfemungsmessvorrichtung (EM), die die Abstände der Objektpunkte (O) im Objektraum (OR) relativ zur Aufnahmevorrichtung (A) misst, einer Rechnereinheit (RE), einer Schaltvorrichtung (S), die in die Rechnereinheit (RE) integriert ist und je nach Größe der Stereobasis eine Auswahl von Kamerabündeln vornimmt, einem Monitor (M) und einer Benutzerschnittstelle (BS).

## Patentansprüche

1. Vorrichtung zur automatischen Positionierung von mindestens zwei für die plastische Bildaufnahme gekoppelten Kameras (K), wobei diese Vorrichtung neben den gekoppelten Kameras aufweist:
- eine Einrichtung zur Abstandsmessung (EM), die so gestaltet ist, dass sie die Entfernungen von mehreren relevanten Punkten (O) im Objektraum (OR) relativ zur Aufnahmevorrichtung (A) messen und entsprechende Ausgangssignale liefern kann, wobei die relevanten Punkte (O) manuell oder automatisch ausgewählt werden können,
- eine Rechnereinheit (RE), die so gestaltet ist, dass sie die Stereobasis sowie Parameter, wie Einschwenkwinkel, Korrekturparameter und innere Parameter, der Kameras (K) in Abhängigkeit der von der Abstandsmessung gelieferten Ausgangsdaten und ggf. manuell eingegebener Daten berechnen kann, und
- eine Positioniereinrichtung (P), mit der die Kameras (K) in Abhängigkeit der berechneten Stereobasis und der berechneten Parameter einjustierbar sind.

2. Vorrichtung zur automatischen Auswahl aus mindestens drei für die plastische Bildaufnahme gekoppelten Kameras (Kn), wobei diese Vorrichtung neben den gekoppelten Kameras (Kn) aufweist:
- eine Einrichtung zur Abstandsmessung (EM), die so gestaltet ist, dass sie die Entfernungen von mehreren relevanten Punkten (O) im Objektraum (OR) relativ zur Aufnahmevorrichtung (A) messen und entsprechende Ausgangssignale liefern kann, wobei die relevanten Punkte (O) manuell oder automatisch ausgewählt werden können,
- eine Rechnereinheit (RE), die so gestaltet ist, dass sie die Stereobasis sowie Parameter, wie Korrekturparameter und innere Parameter, der Kameras (Kn) in Abhängigkeit der von der Abstandsmessung gelieferten Ausgangsdaten und ggf. manuell eingegebener Daten berechnen kann, und
- eine Schaltvorrichtung (S), die mit der Rechnereinheit (RE) eine einzige Einheit bilden kann, die eine Auswahl von Kamerabündeln je nach Größe der Stereobasis treffen kann.

3. Vorrichtung nach Anspruch 1, **dadurch gekennzeichnet,**
**dass** die Positioniereinrichtung (P) der Kameras (K) Schrittmotoren aufweist.

4. Vorrichtung nach Anspruch 1 oder 3, **dadurch gekennzeichnet,**
**dass** die Positioniereinrichtung (P) der Kameras (K) manuell oder automatisch von der Rechnereinheit (RE) einstellbar ist.

5. Vorrichtung nach einem der Ansprüche 1 bis 4, **dadurch gekennzeichnet,**
**dass** ein Monitor vorhanden ist, der die Grenzen bei der plastischen Bildgestaltung visualisieren kann.

6. Vorrichtung nach einem der Ansprüche 1 bis 5, **dadurch gekennzeichnet,**
**dass** eine Anzeigevorrichtung an der Aufnahmevorrichtung (A) vorhanden ist, die die Grenzen bei der plastischen Bildgestaltung visualisieren kann.

7. Vorrichtung nach einem der Ansprüche 5 oder 6, **dadurch gekennzeichnet,**
**dass** der Monitor und/oder die Anzeigevorrichtung die aktuelle Positionierung bzw. Schaltung mindestens einer der Kameras (K) und/oder aufgrund der berechneten Parameter Vorschläge zur Änderung der Positionierung bzw. Schaltung mindestens einer der Kameras (K) anzeigen kann.

8. Vorrichtung nach einem der Ansprüche 1, 3 bis 7, **dadurch gekennzeichnet,**
**dass** die Positioniereinrichtung so gestaltet ist, dass der Justierweg nach bestimmten Kriterien elektronisch oder mechanisch begrenzt werden kann.

9. Vorrichtung nach einem der Ansprüche 1 bis 8, **dadurch gekennzeichnet,**
**dass** eine plastische Anzeigevorrichtung vorhanden ist, die die Grenzen bei der plastischen Bildgestaltung über die Rechnereinheit (RE) im plastischen Bild visualisieren kann und/oder die plastischen Einzelbilder der einzelnen Kameras elektronisch oder mechanisch automatisch nach Berechnungen oder manuellem Eingriff zueinander verschiebbar sind.

10. Vorrichtung nach einem der Ansprüche 1 bis 9, **dadurch gekennzeichnet,**
**dass** eine Projektionsvorrichtung vorhanden ist, die die Grenzen bei der plastischen Bildgestaltung durch Projektion in den Objektraum visualisieren kann.

11. Vorrichtung nach Anspruch 10, **dadurch gekennzeichnet,**
**dass** die Projektionsvorrichtung die Informationen in ausgewählten Wellenlängenbereichen oder in mit den Kameras (K) synchronisierten Zeitbereichen so projiziert, dass diese die plastische Bildaufnahme nicht stören, wohl aber für den menschlichen Betrachter sichtbar sind.

12. Vorrichtung nach einem der Ansprüche 1 bis 11, **dadurch gekennzeichnet,**
**dass** die Rechnereinheit (RE) eine Benutzerschnittstelle aufweist, bei der Parameter manuell gewählt, modifiziert oder eingegeben werden können.

13. Vorrichtung nach einem der Ansprüche 1 bis 12, **dadurch gekennzeichnet,**
**dass** die Rechnereinheit ein Programm aufweist, das aus vorgespeicherten Daten Vorschläge zur Tiefengestaltung anzeigen oder ausführen kann.

14. Vorrichtung nach einem der Ansprüche 1 bis 13, **dadurch gekennzeichnet,**
**dass** die Rechnereinheit so ausgelegt ist, dass die Verstellung der Parameter automatisch aktualisiert oder Gegebenheiten angepasst werden kann.

15. Vorrichtung nach einem der Ansprüche 1 bis 14, **dadurch gekennzeichnet,**
**dass** eine Aufzeichnungseinrichtung vorhanden ist, die die für die plastische Bildaufnahme berechneten und eingestellten Daten zusätzlich zu aus dem verwendeten Equipment ausgelesenen Daten als sogenannte Metadaten aufzeichnen kann.

## Claims

1. Device for automatic positioning of at least two coupled cameras for three dimensional image recording (K), whereas this device consists of the following components besides the coupled cameras:
- a device for distance measurement (EM), that is designed in such a way, that it is able to read distances of several relevant spots/objects (O) in the object space (OR) relative to the recording device (A) and is able to provide corresponding output signals, in which relevant spots/objects (O) can be chosen manually or automatically,
- a processing unit (RE), that is designed in such a way, that the interaxial distance as well as parameters such as angle of convergence, correction parameters and inner parameters of the cameras (K) can be calculated depending on the output parameters of the distance measurement and/or optional manually input parameters, and
- a device for positioning (P), that allows an adjustment of the cameras (K) depending on the calculated interaxial distance and the other calculated parameters .

2. A device for automatic selection from at least three coupled cameras for three dimensional image recording (Kn), whereas this device consists of the following components in addition to the coupled cameras (Kn):
- a device for distance measurement (EM), that is designed in such a way, that it is able to read distances of several relevant spots/objects (0) in the object space (OR) relative to the recording device (A) and is able to provide corresponding output signals, in which relevant spots/objects (0) can be chosen manually or automatically,
- a processing unit (RE), that is designed in such a way, that the interaxial distance as well as parameters such as correction parameters and inner parameters of the cameras (Kn) can be calculated depending on the output parameters of the distance measurement , and/or optional manually input parameters, and
- a device for switching (S), which can form one single unit with the processing unit (RE) which is able to select a set of cameras depending on the value of the interaxial distance.

3. Apparatus according to claim 1, **characterized by**,
that the device for positioning (P) of the cameras (K) has stepper motors.

4. Apparatus according to claim 1 or 3 **characterized by**,
that the device for positioning (P) of the cameras (K) is adjustable manually or automatically by the processing unit (RE).

5. Apparatus according to one of the claims 1 to 4, **characterized by**,
that there is a monitor available that is able to visualize the limits of the three dimensional image design.

6. Apparatus according to one of the claims 1 to 5, **characterized by**,
that there is a device for displaying available on the recording device (A) that is able to visualize the limits of the three dimensional image design.

7. Apparatus according to one of the claims 5 or 6, **characterized by**,
that the monitor and/or the device for displaying is able to show the actual position or selection of at least one of the cameras (K) and/or is able to provide alternatives/suggestions for a change of the current positioning (change of the current interaxial distance) or change/improvement of the selection of at least one of the cameras (K).

8. Apparatus according to one of the claims 1, 3 to 7, **characterized by**,
that the device for positioning is designed in such a way, that the path of adjustment (interaxial distance) can be limited electronically or mechanically according to certain criteria.

9. Apparatus according to one of the claims 1 to 8, **characterized by**,
that there is a device for three dimensional displaying available, that is able to visualize the limits of the three dimensional image design in the three dimensional image by usage of the processing unit (RE) and/or that it is able to move the stereoscopic fields of the individual cameras in relation to each other electronically or mechanically corresponding to calculations in an automatic way or with manual interaction/input.

10. Apparatus according to one of the claims 1 to 9, **characterized by**,
that there is a projection device available, that is able to visualize the limits of the three dimensional image design by projection of those limits into the object space.

11. Apparatus according to claim 10, **characterized by**,
that the projection device projects the information in selected wavelength areas or projects it into time intervals, that are synchronized with the cameras (K) in such a way, that the information does not disturb the three dimensional recording, but is visible for a spectator on set.

12. Apparatus according to one of the claims 1 to 11, **characterized by**,
that the processing unit (RE) has a user interface, where parameters can be chosen, changed or input by the user.

13. Apparatus according to one of the claims 1 to 12, **characterized by**,
that the processing unit has a program, that is able to display or execute alternatives/suggestions for a depth composition from prestored data.

14. Apparatus according to one of the claims 1 to 13, **characterized by**,
that the processing unit is designed in such a way, that the adjustment of parameters (such as the interaxial distance) can be updated automatically or upon present conditions/requirements.

15. Apparatus according to one of the claims 1 to 14, **characterized by**,
that there is a recording device available, that can record the data which were calculated for the three dimensional image recording, as well as the data set on the device and as well as the data that was read out of the used equipment as meta data.

## Revendications

1. Dispositif pour le positionnement automatique d'au moins deux caméras (K) couplées pour la prise de vue plastique, ce dispositif présentant, outre les caméras couplées, ce qui suit :
- une installation pour la mesure des écarts (EM), conçue de manière à pouvoir mesurer les éloignements de plusieurs points (O) importants dans l'espace objet (OR) par rapport au dispositif de prise de vue (A) et émettre les signaux de sortie correspondants, les points (O) importants pouvant être sélectionnés manuellement ou automatiquement,
- une unité de calcul (RE) conçue de manière à pouvoir calculer la base stéréo ainsi que des paramètres tels que les angles de pivotement, les paramètres de correction et les paramètres internes des caméras (K) en fonction des données de sortie délivrées par la mesure des écarts et, le cas échéant, des données indiquées manuellement, et
- un dispositif de positionnement (P) avec lequel les caméras (K) peuvent être ajustées en fonction de la base stéréo calculée et des paramètres calculés.

2. Dispositif pour la sélection automatique d'au moins trois caméras (Kn) couplées pour la prise de vue plastique, ce dispositif présentant, outre les caméras couplées (Kn), ce qui suit :
- une installation pour la mesure des écarts (EM), conçue de manière à pouvoir mesurer les éloignements de plusieurs points (O) importants dans l'espace objet (OR) par rapport au dispositif de prise de vue (A) et émettre des signaux de sortie correspondants, les points (O) importants pouvant être sélectionnés manuellement ou automatiquement,
- une unité de calcul (RE) conçue de manière à pouvoir calculer la base stéréo ainsi que des paramètres tels que les paramètres de correction et les paramètres internes des caméras (Kn) en fonction des données de sortie délivrées par la mesure des écarts et, le cas échéant, des données indiquées manuellement, et
- un dispositif de commutation (S) pouvant constituer une unité complète avec l'unité de calcul (RE), offrant une sélection de groupes de caméras en fonction de la taille de la base stéréo.

3. Dispositif selon la revendication 1, **caractérisé par le fait**
**que** le dispositif de positionnement (P) des caméras (K) présente des moteurs pas à pas.

4. Dispositif selon la revendication 1 ou 3, **caractérisé par le fait**
**que** le dispositif de positionnement (P) des caméras (K) est réglable manuellement ou automatiquement par l'unité de calcul (RE).

5. Dispositif selon une des revendications 1 à 4, **caractérisé par le fait**
**qu'**un moniteur est disponible, celui-ci permettant de visualiser les limites pour la conception d'image plastique.

6. Dispositif selon une des revendications 1 à 5, **caractérisé par le fait**
**qu'**un dispositif d'affichage permettant de visualiser les limites pour la conception d'image plastique est disponible sur le dispositif de prise de vue (A).

7. Dispositif selon une des revendications 5 ou 6, **caractérisé par le fait**
**que** le moniteur et/ou le dispositif d'affichage peuvent afficher le positionnement et le couplage actuels d'au moins une des caméras (K) et/ou, en raison des paramètres calculés, propositions relatives à la modification du positionnement et du couplage d'au moins une des caméras (K).

8. Dispositif selon une des revendications 1, 3 à 7, **caractérisé par le fait**
**que** le dispositif de positionnement est conçu de manière à ce que le mouvement d'ajustement puisse être limité électroniquement ou mécaniquement selon certains critères.

9. Dispositif selon une des revendications 1 à 8, **caractérisé par le fait**
**qu'**un dispositif d'affichage plastique est disponible, permettant de visualiser les limites lors de la conception d'image par le biais de l'unité de calcul (RE) sur l'image plastique et/ou chaque image plastique de chaque caméra est réglable électroniquement ou mécaniquement les unes en fonction des autres de manière automatique selon des calculs ou une intervention manuelle.

10. Dispositif selon une des revendications 1 à 9, **caractérisé par le fait**
**qu'**un dispositif de projection est disponible, permettant de visualiser les limites lors de la conception d'image par une projection dans l'espace objet.

11. Dispositif selon la revendication 10, **caractérisé par le fait**
**que** le dispositif de projection projette les informations dans des longueurs d'ondes ou dans des domaines temporels synchronisés avec les caméras (K) de manière à ce que celles-ci ne gênent pas la prise de vue plastique, mais à ce qu'elles soient bien visibles pour l'observateur humain.

12. Dispositif selon une des revendications 1 à 11, **caractérisé par le fait**
**que** l'unité de calcul (RE) présente une interface d'utilisateur permettant de sélectionner, modifier ou indiquer manuellement les paramètres.

13. Dispositif selon une des revendications 1 à 12, **caractérisé par le fait**
**que** l'unité de calcul présente un programme pouvant afficher ou exécuter des propositions relatives à la conception de la profondeur à partir de données préenregistrées.

14. Dispositif selon une des revendications 1 à 13, **caractérisé par le fait**
**que** l'unité de calcul est exposée de manière à ce que le réglage des paramètres puisse être mis à jour automatiquement ou adapté à des données.

15. Dispositif selon une des revendications 1 à 14, **caractérisé par le fait**
**qu'**un appareil d'enregistrement est disponible, permettant d'enregistrer les données paramétrées et calculées pour la prise de vue plastique, outre les données lues à partir de l'équipement utilisé, en tant que lesdites métadonnées.
